# EUROPEAN PATENT APPLICATION

(11) **EP 4 459 737 A1**
(43) Date of publication of application: **06.11.2024**
(21) Application number: 23799627.7
(22) Date of filing: 27.04.2023
(51) Int. Cl.: H01M 10/42, H01M 50/691, H01M 50/251, H01M 10/48, A62C 3/16, A62C 35/02, A62C 35/68, A62C 99/00

(54) **ENERGY STORAGE SYSTEM**

(30) Priority: 02.05.2022 KR 20220054390; 02.05.2022 KR 20220054391
(71) Applicant: LG Energy Solution, Ltd., Seoul 07335 (KR)
(72) Inventor: KIM, Ji-Hun, Daejeon 34122 (KR); KIM, Yo-Hwan, Daejeon 34122 (KR); PARK, Hong-Jae, Daejeon 34122 (KR); YANG, Mun-Seok, Daejeon 34122 (KR); YOON, Sung-Han, Daejeon 34122 (KR); LEE, Seung-Jun, Daejeon 34122 (KR); LEE, Ji-Won, Daejeon 34122 (KR); LEE, Hyun-Min, Daejeon 34122 (KR); LEE, Hyung-Uk, Daejeon 34122 (KR); CHO, Tae-Shin, Daejeon 34122 (KR)
(74) Representative: Plasseraud IP
(86) International application number: PCT/KR2023/005825
(87) International publication number: WO 2023/214744

(57) **Abstract**

An energy storage system according to the present disclosure includes at least one battery rack including a plurality of stacked battery modules; and a container accommodating the battery rack, wherein the container includes a bottom plate in which the battery racks are disposed; and a fire fighting water collection chamber disposed lower than the bottom plate and having at least one side in communication with the bottom plate to allow a fire fighting water dropped from the battery racks to enter.

## Description

### TECHNICAL FIELD

The present disclosure relates to an energy storage system, and more particularly, to an energy storage system that enables the collection and disposal or recycling of a fire fighting water used to suppress fire.

The present application claims priority to Korean Patent Application Nos. 10-2022-0054390 and 10-2022-0054391 filed on May 2, 2022 in the Republic of Korea, the disclosures of which are incorporated herein by reference.

### BACKGROUND ART

Secondary batteries widely used at present include lithium ion batteries, lithium polymer batteries, nickel cadmium batteries, nickel hydrogen batteries, nickel zinc batteries or the like. Among them, lithium secondary batteries have little or no memory effect, and thus they are gaining more attention than nickel-based secondary batteries for their advantages that recharging can be done whenever it is convenient, the self-discharge rate is very low and the energy density is high.

In general, lithium secondary batteries may be classified into can type secondary batteries in which an electrode assembly is included in a metal can and pouch type secondary batteries in which an electrode assembly is included in a pouch of an aluminum laminate sheet according to the shape of outer packaging.

A secondary battery may be used alone, but in general, since the voltage of a secondary battery is about 2.5V to 4.5V, when a higher output voltage is required, a plurality of secondary batteries may be connected in series and/or in parallel to form a battery module. Additionally, a battery module may be used alone, or two or more battery modules may be electrically connected in series and/or in parallel to form a device of higher level such as a battery rack or a battery pack.

Recently, with the rising issues such as energy shortage or eco-friendly energy, attention is paid to an energy storage system including a plurality of battery racks to store power during off-peak hours and use the stored power during peak hours.

In an example, an industrial energy storage system includes battery racks, each including a rack case and a plurality of battery modules which is received in the rack case along the vertical direction, an air conditioning device to manage the temperature of the battery racks and a container to provide a space accommodating the components.

More recently, as the fire safety measures of the energy storage system, a fire extinguishing system is introduced into the energy storage system, the fire extinguishing system designed to, in the event of thermal runaway of battery cells in a specific battery module mounted in a battery rack, feed a fire fighting water into the specific battery module before heat propagation to the other battery modules in order to suppress the fire.

However, when the fire fighting water is fed into the battery rack or the container to suppress the fire, the fire fighting water remains on the bottom of the battery rack or the container, and collection and disposal of the used fire fighting water (sewage) is not easy and requires a lot of labor and time.

Meanwhile, a water tank in which a predetermined amount of fire fighting water is stored is disposed near the container to feed the fire fighting water into the container in the event of fire. Since the water tank cannot accommodate the fire fighting water more than the preset amount, when the fire fighting water goes out of the water tank in the event of fire, it is necessary to refill the water tank with the predetermined amount or more of fire fighting water. However, to fill the water tank with the fire fighting water, it is necessary to draw water from a source of water close to the energy storage system to the water tank or otherwise call a fire engine.

### DISCLOSURE

### Technical Problem

The present disclosure is designed to solve the above-described problem, and therefore the present disclosure is directed to providing an energy storage system with a drain structure for easy collection and disposal of a fire fighting water used to suppress fire.

The present disclosure is further directed to providing an energy storage system that enables the recycling of a fire fighting water used to suppress fire by collecting the used fire fighting water and refilling it in a water tank.

The technical problem to be solved by the present disclosure is not limited to the above-described problems, and these and other problems will be clearly understood by those skilled in the art from the following description.

### Technical Solution

An energy storage system according to the present disclosure includes at least one battery rack including a plurality of stacked battery modules; and a container accommodating the battery rack, and the container may include a bottom plate in which the battery rack is disposed; and a fire fighting water collection chamber disposed lower than the bottom plate and having at least one side in communication with the bottom plate to allow a fire fighting water dropped from the battery rack to enter.

The bottom plate may include a rack installation region in which the battery rack is installed, and a drain region which is an open region to allow the fire fighting water to fall down, and the fire fighting water collection chamber is disposed vertically below the drain region, and the fire fighting water collection chamber may have an inclined bottom surface to direct the fire fighting water entering through the drain region toward a wall of the container.

The energy storage system may include a valve unit coupled to the wall of the container to drain the fire fighting water collected in the fire fighting water collection chamber out of the container.

The energy storage system may include a water level sensor disposed in the fire fighting water collection chamber, and the valve unit may be configured to be open/closed based on a signal from the water level sensor.

The energy storage system may include a drain pump disposed in the fire fighting water collection chamber, and configured to operate based on the signal from the water level sensor.

A plurality of the battery racks may be provided and arranged in N rows in the bottom plate.

The drain region may be disposed in an area between the rows of the battery racks in the bottom plate or an area between a sidewall of the container and an outermost row of the battery racks.

The drain region may be covered with a plate of a porous structure.

The energy storage system may further include a water tank disposed outside of the container; a fire fighting water supply pipe connecting the water tank to the battery rack; and a fire fighting water collection pipe connecting the fire fighting water collection chamber to the water tank.

A water level sensor and a drain pump may be disposed in the fire fighting water collection chamber, and the drain pump may be configured to operate so as to move the fire fighting water to the water tank through the fire fighting water collection pipe in response to detection of a water level in the fire fighting water collection chamber reaching a predetermined height by the water level sensor.

The battery rack may include a plurality of battery modules; a rack case having receiving portions, each configured to insert and receive each of the plurality of battery modules at each predetermined height, and having a structure in which upper and lower sides and left and right sides are closed except front and rear sides; a rack connection pipe connected to each of the battery modules received in the receiving portions to supply the fire fighting water when a fire occurs; and a drain guide unit disposed on at least one surface of a front outer surface or a rear outer surface of the rack case, and configured to guide drainage of the fire fighting water to cause the fire fighting water coming out of the battery module after having been fed into the battery module to be dropped down to a location spaced a predetermined distance apart from the outer surface of the rack case.

The drain guide unit may be coupled to the outer surface of the rack case at a location which is lower than an upper battery module of every two battery modules vertically adjacent to each other and higher than a lower battery module.

The drain guide unit may protrude from the outer surface of the rack case with inclination of a predetermined angle to form an eave structure.

The drain guide unit may be rotatably coupled to the outer surface of the rack case.

The drain guide unit may be configured to form an eave structure for the underlying receiving portion when it is rotated downwards.

The drain guide unit may include a drain guide plate of a plate shape hinged to the outer surface of the rack case; and a stopper configured to limit rotation of the drain guide plate so that the drain guide plate is at a preset angle with respect to the outer surface of the rack case.

The energy storage system may further include a rack die which protrudes upwards from the bottom plate and supports the battery rack a predetermined height apart from the bottom plate; and a fence disposed around the rack die with a predetermined gap from the rack die, protruding upwards from the bottom plate and having at least one drain hole on a side.

### Advantageous Effects

According to the present disclosure, it may be possible to provide the energy storage system with the drain structure for easy collection and disposal of the fire fighting water used to suppress fire.

Additionally, according to the present disclosure, it may be possible to collect the fire fighting water used to suppress fire and refill it in the water tank, thereby enabling the recycling of the fire fighting water. Accordingly, there is an effect as if the capacity of the water tank is enhanced.

Additionally, according to the present disclosure, it may be possible to provide the battery racks for preventing flood damage of other adjacent battery module when feeding the fire fighting water into a target battery module (in which a thermal event occurred) to suppress fire.

The effect of the present disclosure is not limited to the above-described effects, and these and other effects will be clearly understood by those skilled in the art from this disclosure and the accompanying drawings.

### DESCRIPTION OF DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram schematically showing the architecture of an energy storage system according to an embodiment of the present disclosure.
FIG. 2 is a schematic plan view of an energy storage system according to an embodiment of the present disclosure.
FIG. 3 is a schematic cross-sectional view of an energy storage system according to an embodiment of the present disclosure.
FIG. 4 is a diagram showing a central area of a bottom plate of a container according to an embodiment of the present disclosure.
FIG. 5 is a cross-sectional view of section A in FIG. 4.
FIG. 6 is a diagram showing a battery rack according to an embodiment of the present disclosure before insertion of a battery module.
FIG. 7 is a diagram showing a battery rack according to an embodiment of the present disclosure after insertion of a battery module.
FIG. 8 is a front view of the battery rack of FIG. 7.
FIG. 9 is a diagram of the battery rack of FIG. 7 when viewed from the rear side.
FIG. 10 is a rear view of the battery pack of FIG. 7.
FIG. 11 is a rear view of a battery module having an air conditioning hole and a feed valve according to an embodiment of the present disclosure.
FIG. 12 is a partial cross-sectional view of the battery module of FIG. 11.
FIG. 13 is a schematic cross-sectional view of the battery module of FIG. 11.
FIG. 14 is a diagram illustrating an example of feeding and drainage of a fire fighting water into/from a battery rack according to an embodiment of the present disclosure.
FIG. 15 is a diagram schematically showing the architecture of an energy storage system according to another embodiment of the present disclosure.
FIG. 16 is a schematic plan view of an energy storage system according to another embodiment of the present disclosure.
FIG. 17 is a schematic cross-sectional view of an energy storage system according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time that the application was filed.

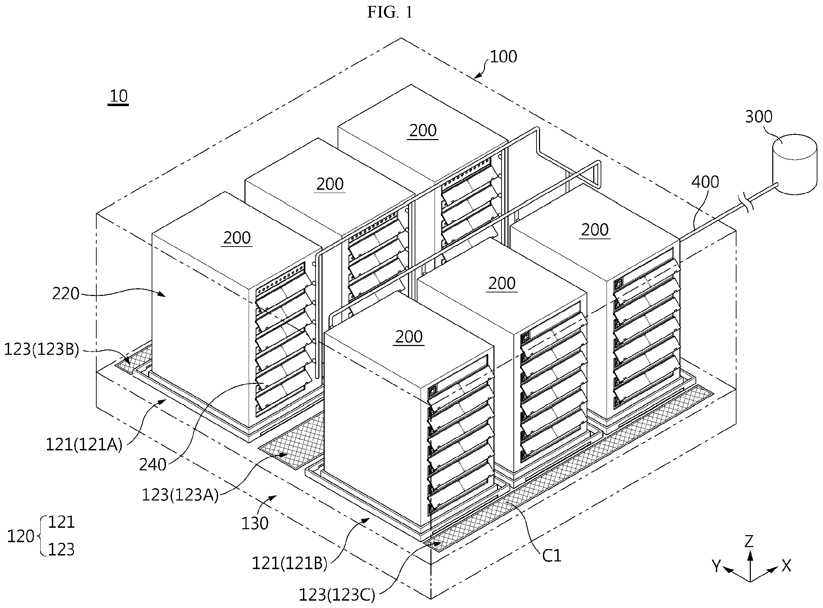

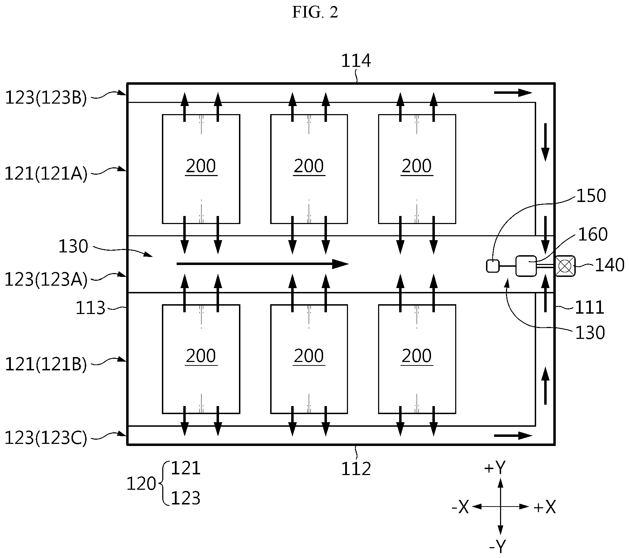

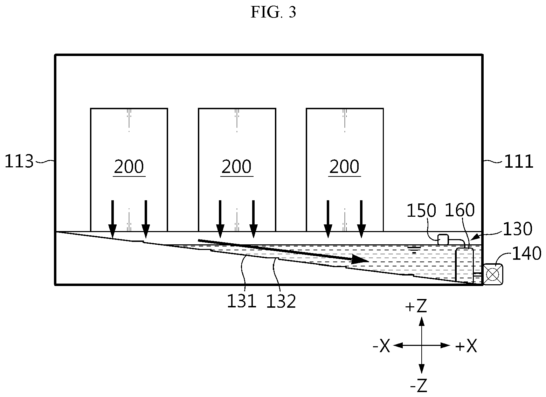

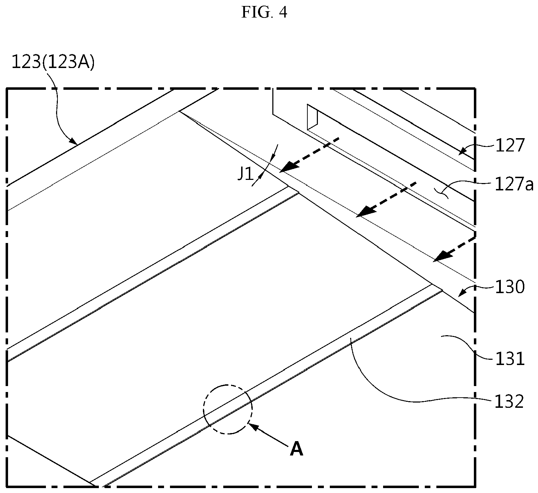

FIG. 1 is a diagram schematically showing the architecture of an energy storage system according to an embodiment of the present disclosure, FIG. 2 is a schematic plan view of the energy storage system according to an embodiment of the present disclosure, FIG. 3 is a schematic cross-sectional view of the energy storage system according to an embodiment of the present disclosure, and FIG. 4 is a diagram showing a central area of a bottom plate of the container according to an embodiment of the present disclosure.

Referring to FIGS. 1 to 4, the energy storage system 10 according to an embodiment of the present disclosure includes a container 100 and at least one battery rack 200 that may be received in the container 100. The container may include the bottom plate 120 in which the battery rack 200 is disposed and a fire fighting water collection chamber 130 disposed lower than the bottom plate 120 and having at least one side in communication with the bottom plate 120 to allow a fire fighting water dropped from the battery rack 200 to enter.

As described in detail below, the energy storage system 10 according to the present disclosure includes the fire fighting water collection chamber 130 in which the used fire fighting water (sewage) is directed toward one wall for collection and disposal, thereby achieving rapid disposal of the fire fighting water (sewage) after the fire situation ends.

The battery rack 200 may include a plurality of stacked battery modules 210. Each battery module 210 may include a plurality of secondary batteries and a module housing 212 accommodating the secondary batteries. Additionally, each battery module 210 may be received in a rack case 220 and stacked in at least one direction. For example, each battery module 210 may be stacked in the vertical direction through the rack case 220.

The plurality of battery racks 200 may be arranged along at least one direction in the container 100. For example, the energy storage system 10 according to the present disclosure may include six battery racks 200 arranged in two rows, three in each row, within the container 100 as shown in FIG. 1. The number of battery rack 200 included in the energy storage system 10 may be larger or smaller than six. Additionally, unlike this embodiment, the battery racks 200 may be arranged in three, four or more rows according to the size of the container 100 or the number of battery racks 200. That is, the battery racks 200 may be arranged in N rows (N is a natural number) in the bottom plate 120 within the container 100.

Additionally, the battery rack 200 according to the present disclosure may be configured to discharge the fire fighting water in the frontward or rearward direction of the rack case 220 after the fire fighting water is fed into the rack case 220 to suppress fire. For example, as shown in FIG. 1, the rack case 220 may be formed in a structure in which upper and lower (±Z) sides and left and right (±X) sides are closed and front and rear (±Y) sides are open. By the above-described configuration of the rack case 220, the fire fighting water (sewage) used to suppress fire may be drained in the frontward or rearward direction of the rack case 220.

As shown in FIGS. 1 to 3, the container 100 includes the bottom plate 120 in which the battery racks 200 are arranged, the fire fighting water collection chamber 130 disposed lower than the bottom plate 120 and walls surrounding the internal space. Here, the walls include a first wall 111, a third wall 113 opposite the first wall 111 in parallel to each other, a second wall 112 crossing the first wall 111 and having two end portions connected to the first wall 111 and the third wall 113, and a fourth wall 114 opposite the second wall 112 in parallel to each other and having two end portions connected to the first wall 111 and the third wall 113. The container 100 is preferably made of a metal such as steel, and alternatively, may be in the form of a concrete structure.

The bottom plate 120 may include a rack installation region 121 and a drain region 123. Here, the rack installation region 121 refers to a region in which the battery racks 200 are installed, and the drain region 123 refers to an open region to allow the fire fighting water (sewage) to fall down from the bottom plate 120 and the fire fighting water collection chamber 130 is disposed vertically below the drain region 123.

When the battery racks 200 are arranged in N rows, N rack installation regions 121 may be present, and the drain region 123 may be disposed in areas between the rows of the battery racks 200 arranged in the N rack installation regions 121 or areas between the sidewalls of the container 100 and the outermost rows of the battery racks 200.

For example, as shown in FIG. 1, the rack installation regions 121 according to this embodiment include a first rack installation region 121A and a second rack installation region 121B to arrange the battery racks 200 in two rows. The first rack installation region 121A and the second rack installation region 121B may be spaced a predetermined distance apart from each other (in Y direction). The three battery racks 200 may be arranged in the first rack installation region 121A along the X direction, and the three other battery racks 200 may be arranged in the second rack installation region 121B along the X direction, so the six battery racks 200 may be arranged in two rows, three in each row.

In this instance, each battery rack 200 may be arranged such that the drainage direction of the fire fighting water, that is, the front or rear side of the rack case faces the drain region 123. Additionally, each battery rack 200 may be connected to a fire fighting water supply pipe 400 to receive the fire fighting water in case of emergency. Additionally, the fire fighting water supply pipe 400 may be connected to a water tank 300 outside of the container 100.

When a thermal event occurs in the battery module 210 included in the battery rack 200, each battery rack 200 may be configured to receive the fire fighting water for fire suppression from the water tank 300 outside of the container 100 through the fire fighting water supply pipe 400, and drain the used fire fighting water in the frontward or rearward direction of the rack case 220.

The drain region 123 according to this embodiment may include a central drain region 123A at the center of the bottom plate 120 and a first side drain region 123B and a second side drain region 123C at two sides of the bottom plate 120.

The central drain region 123A may be disposed in an area between the first rack installation region 121A and the second rack installation region 121B, in other words, an area between the battery racks 200 in the first row and the battery racks 200 in the second row. Additionally, the first side drain region 123B may be disposed in an area between the fourth wall 114 and the first rack installation region 121A, and the second side drain region 123C may be disposed in an area between the second wall 112 and the second rack installation region 121B.

By the above-described configuration, as shown in FIG. 2, the fire fighting water used to suppress fire in the battery racks 200 in the first row may be drained from the battery racks 200 in the first row in +Y direction or -Y direction. In this case, the fire fighting water drained in -Y direction may flow into the central drain region 123A and the fire fighting water drained in +Y direction may flow into the first side drain region 123B.

Additionally, the fire fighting water used to suppress fire in the battery racks 200 in the second row may be drained from the battery racks 200 in the second row in +Y direction or -Y direction. In this case, the fire fighting water drained in +Y direction may flow into the central drain region 123A and the fire fighting water drained in -Y direction may flow into the second side drain region 123C.

The drain region 123 may be covered with a plate C1 of a porous structure (see FIG. 1). For example, the drain region 123 may be covered by a cover of a grating structure to allow an operator to move on the drain region 123, that is, the fire fighting water collection chamber 130.

The fire fighting water collection chamber 130 may be a storage space disposed lower than the bottom plate 120 to temporarily store the fire fighting water (see FIG. 3). The fire fighting water may fall down from the drain region 123 and enter the fire fighting water collection chamber 130. The fire fighting water collection chamber 130 may have an inclined bottom surface 131 to direct the fire fighting water toward the wall of the container 100. For example, the bottom surface 131 of the fire fighting water collection chamber 130 may be inclined in a way that it becomes lower from the third wall 113 to the first wall 111. In this case, as the fire fighting water moves along the inclined bottom surface 131, the fire fighting water is directed toward the first wall 111 of the container 100 in the fire fighting water collection chamber 130.

Meanwhile, the fire fighting water collection chamber 130 according to this embodiment is disposed vertically below each of the central drain region 123, the first side drain region 123 and the second side drain region 123, corresponding to each drain region 123, and is connected to each other at the first wall 111. That is, the fire fighting water collection chamber 130 has a divided structure without a drainage path vertically below the first rack installation region 121 and the second rack installation region 121. This is to direct the fire fighting water toward the first wall 111 by making a drainage passage in which the fire fighting water moves below the bottom plate 120 narrow to cause the fire fighting water to move rapidly. In another embodiment, the space below the bottom plate 120 may be formed as a space for collection of the fire fighting water by eliminating the divisions of the fire fighting water collection chamber 130 in order to enhance the storage capacity of the fire fighting water collection chamber 130. Alternatively, when the battery rack 200 is configured to drain the fire fighting water in a direction facing the central drain region 123A, the first side drain region 213B and the second side drain region 213C may be removed and accordingly the fire fighting water collection chamber 130 may be only disposed below the central drain region 123A.

More specifically, referring to FIGS. 3 and 4 showing the exemplary configuration of the central drain region 123, when the fire fighting water comes out of the battery racks 200 in the first row or the battery racks 200 in the second row in -Y direction or +Y direction, the fire fighting water may first move to the central drain region 123, fall down from the central drain region 123 and enter the fire fighting water collection chamber 130. Then, the fire fighting water entering the fire fighting water collection chamber 130 moves to the first wall 111 along the inclined bottom surface 131 of the fire fighting water collection chamber 130. As the fire fighting water is directed toward the first wall 111, the level of the fire fighting water increases toward the first wall 111.

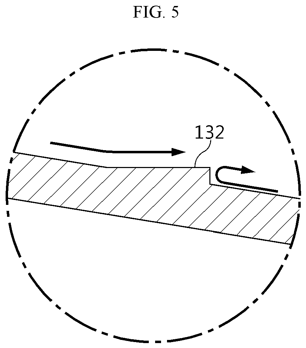

Here, the degree of inclination of the fire fighting water collection chamber 130 indicated by J1 in FIG. 4 may be, for example, determined in a range between 5° and 60°, taking into account the length of the container 100 in X direction. Additionally, a backflow prevention step 132 may be formed in the bottom surface 131 of the fire fighting water collection chamber 130. As shown in FIG. 5, the backflow prevention step 132 may be formed at a predetermined interval along the inclined surface in the bottom surface 131 of the fire fighting water collection chamber 130 to prevent the backflow of the fire fighting water and prevent slips when the operator cleans the fire fighting water collection chamber 130.

Referring back to FIGS. 2 and 3, to drain the fire fighting water collected in the fire fighting water collection chamber 130 out of the container 100, the energy storage system according to the present disclosure may further include a valve unit 140, a water level sensor 150 and a drain pump 160.

The valve unit 140 refers to a mechanical device that shuts off the flow channel or controls the flow volume. For example, the valve unit 140 may be a ball valve or a gate valve. The valve unit 140 may be connected to the fire fighting water collection chamber 130 through a drain tube which is installed outside of the wall of the container 100, that is, the first wall 111 in this embodiment, and passes through the first wall 111. When the predetermined amount of fire fighting water is collected in the fire fighting water collection chamber 130, the fire fighting water may be drained out of the container 100 by opening the valve unit 140.

According to the structure of the fire fighting water collection chamber 130 according to this embodiment, the level of the fire fighting water increase toward the first wall 111, and when the valve unit 140 is installed below the first wall 111 and the valve unit 140 is open, the fire fighting water may be smoothly discharged out of the container 100 by a level difference of the fire fighting water.

However, as the level of the fire fighting water gradually decreases, the flow volume and the flow velocity of the fire fighting water flowing into the valve unit 140 decreases, and thus it may be difficult to completely drain the fire fighting water in the fire fighting water collection chamber 130 out of the container 100. Additionally, it is necessary to open the valve unit 140 before the fire fighting water collection chamber 130 is fully filled with the fire fighting water. Otherwise, the fire fighting water may flow over the bottom plate 120.

The water level sensor 150 and the drain pump 160 may be used to solve this problem.

As shown in FIG. 3, the fire fighting water collection chamber 130 may be equipped with the water level sensor 150 to detect the level of the fire fighting water, and the valve unit 140 may be open/closed based on a signal from the water level sensor 150. For example, when the level of the fire fighting water reaches a preset level, the water level sensor 150 may be configured to transmit a signal for drainage to a valve control unit or generate an alarm sound. In this instance, the valve unit 140 may be automatically opened by the valve control unit or manually opened by the operator who detected the alarm sound.

Additionally, the fire fighting water collection chamber 130 may be further equipped with the drain pump 160. The drain pump 160 may be configured to operate based on the signal from the water level sensor 150. For example, in the same way as the valve unit 140, when the preset water level is detected by the water level sensor 150, the signal of the water level sensor 150 may be transmitted to the drain pump 160 and the drain pump 160 may be switched on to cause the fire fighting water to move to the drain tube connected to the valve unit 140.

By the architecture and operation of the energy storage system 10 with the drain structure according to the present disclosure, it may be possible to achieve easy collection and disposal of the fire fighting water (sewage) used to suppress fire, thereby reducing the time taken to re-operate the energy storage system 10 after the fire situation ends. Additionally, it may be possible to move the fire fighting water to a safe location through external pipe connected to the valve unit 140, or move the fire fighting water to the water tank 300 (having the reduced capacity since the fire fighting water came out of the water tank 300 to suppress fire), thereby enhancing the capacity of the water tank 300.

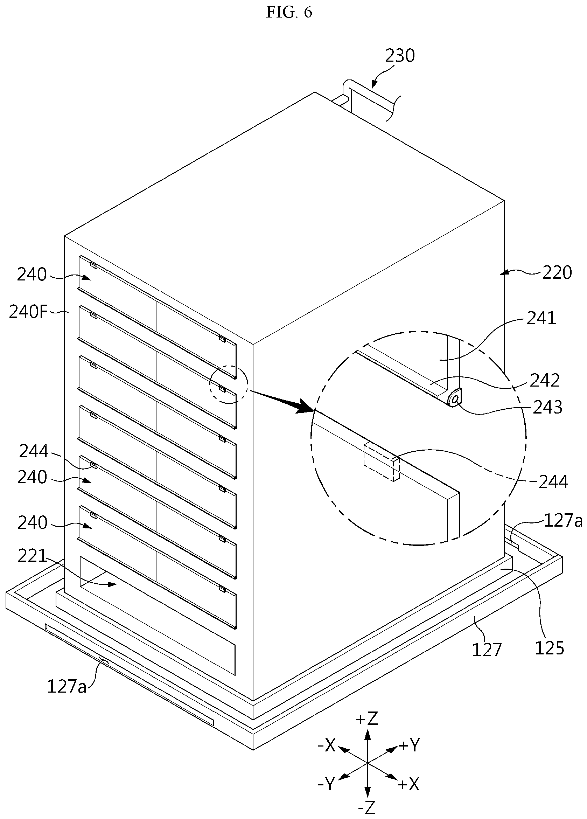

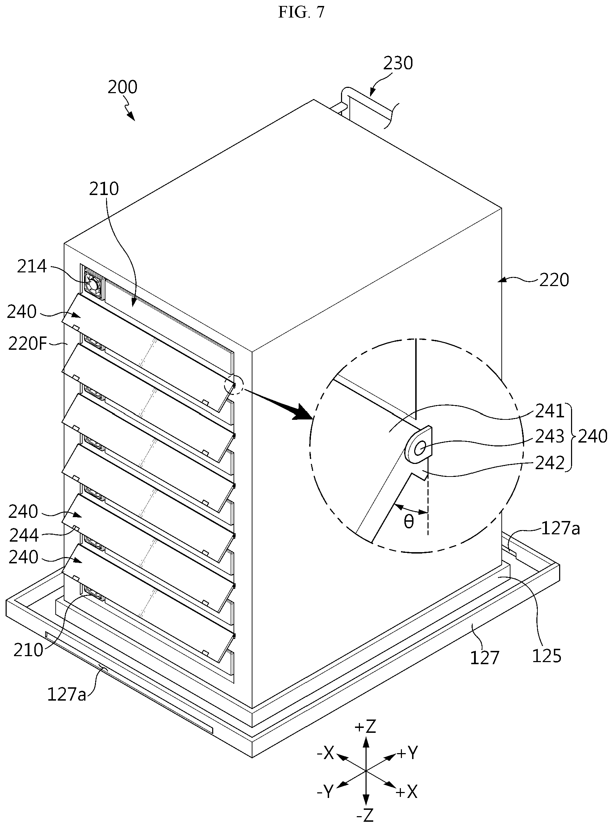

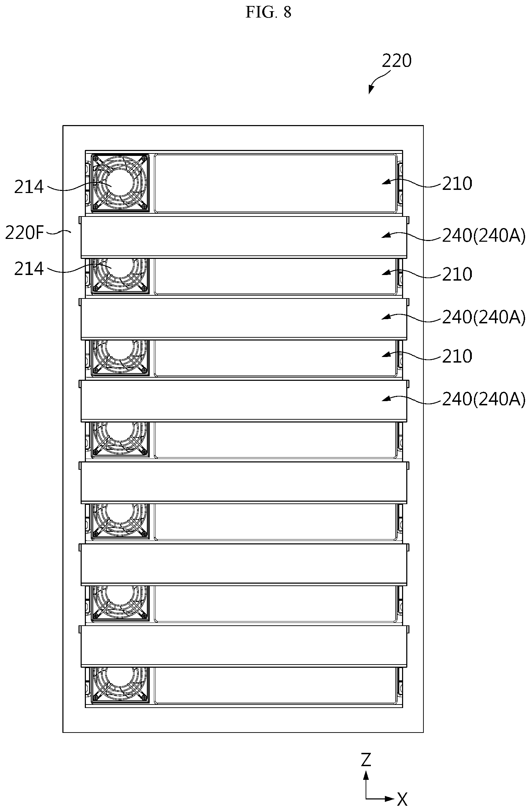

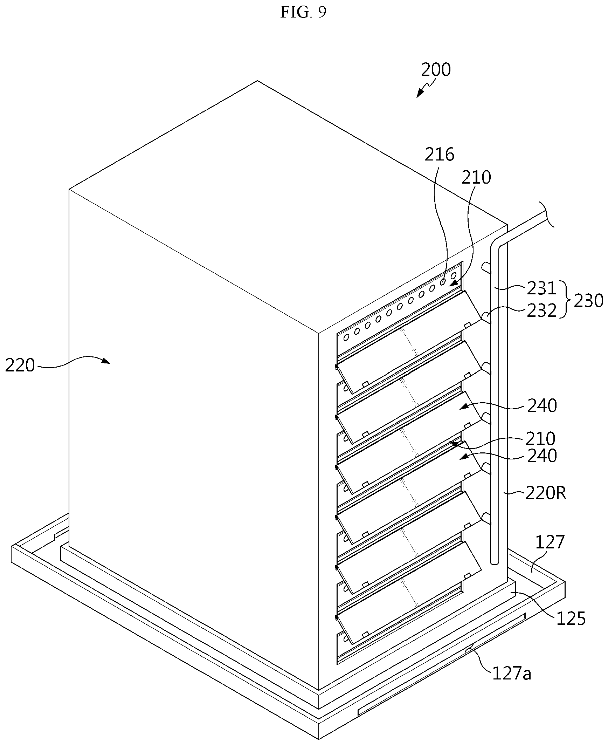

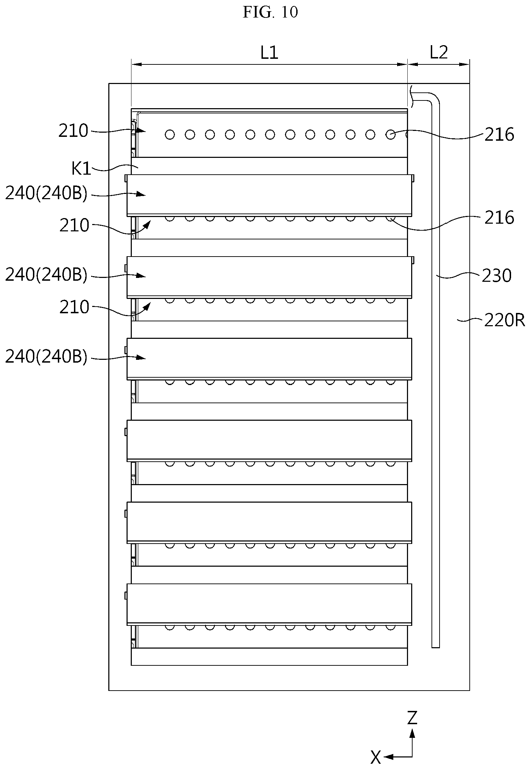

FIG. 6 is a diagram showing the battery rack 200 according to an embodiment of the present disclosure before insertion of the battery module 210, FIG. 7 is a diagram showing the battery rack 200 according to an embodiment of the present disclosure after insertion of the battery module 210, FIG. 8 is a front view of the battery rack 200 of FIG. 7, FIG. 9 is a diagram of the battery rack 200 of FIG. 7 when viewed from the rear side, and FIG. 10 is a rear view of the battery pack of FIG. 7.

Subsequently, the battery rack 200 included in the energy storage system 10 according to an embodiment of the present disclosure will be described with reference to FIGS. 6 to 10.

Referring to FIGS. 6 to 10, the battery rack 200 according to an embodiment of the present disclosure may include the plurality of battery modules 210, the rack case 220, a rack connection pipe 230 and a drain guide unit 240.

Each battery module 210 may include the secondary batteries 211 and the module housing 212 accommodating the secondary batteries 211 and may be configured to store and release electrical energy. Here, the secondary batteries 211 may be connected in series and/or in parallel within the module housing 212 according to the required capacity and output for the battery module 210.

Additionally, each battery module 210 may include a cooling fan 214 and an air conditioning hole 216 to dissipate heat generated during charging/discharging. For example, the cooling fan 214 may be disposed in the front surface portion of the module housing 212 and the air conditioning hole 216 may be disposed in the rear surface portion of the module housing 212. When the cooling fan 214 operates, after the outside air enters the battery module 210 through the air conditioning hole 216 in the rear surface portion of the battery module 210 and absorbs heat of the secondary batteries 211, the air may be forced out through the cooling fan 214 in the front surface portion of the battery module 210. On the contrary to this embodiment, the cooling fan 214 may be disposed in the rear surface of the battery module 210 and the air conditioning hole 216 may be disposed in the front surface of the battery module 210.

Additionally, each battery module 210 may be configured to directly feed the fire fighting water into the module housing 212 in case of a situation in which a thermal event such as thermal runaway, fire, explosion or the like occurs in the secondary battery 211 during charging/discharging. For example, the rack connection pipe 230 is connected to the rear surface of each battery module 210, and when a thermal event occurs, the fire fighting water may be fed into the corresponding battery module 210. Its detailed description will be provided below.

As shown in FIG. 7, the rack case 220 may be approximately cuboidal in shape to insert and receive each of the plurality of battery modules 210 at each predetermined height. Additionally, the rack case 220 may be made of a stiff material, preferably, a metallic or non-metallic material having high mechanical strength to protect the battery modules 210 from impacts or vibration.

In particular, the rack case 220 according to the present disclosure may include a plurality of receiving portions 221 along the vertical direction and may be configured to receive each battery module 210 in each receiving portion 221. Each receiving portion 221 may have a structure in which the upper, lower, left and right sides (+Z,-Z,-X,+X) are closed except the front side (-Y) and the rear side (+Y).

For example, as opposed to the present disclosure, in the case of the rack case having the open upper, lower, left and right sides, when the fire fighting water is fed into the specific battery module, leakage of the fire fighting water occurs as long as the battery module is not a completely airtight structure. The battery modules located below the corresponding battery module may suffer flood damage. To solve this problem, the rack case 220 according to the present disclosure is configured such that the upper, lower, left and right sides of each receiving portion 221 are closed and the front and rear sides are open to prevent flood damage of the other battery modules 210 and guide the drainage of the fire fighting water in the frontward or rearward direction when suppressing fire using the fire fighting water.

Additionally, the drain guide unit 240 may be disposed on at least one side of the front outer surface or the rear outer surface of the rack case 220 to cause the fire fighting water to be dropped down to a location spaced a predetermined distance apart from the outer surface of the rack case 220 when the fire fighting water coming out of the battery module 210 moves to the front side or rear side of the rack case 220 and falls out of the rack case 220.

As shown in FIG. 7, the drain guide unit 240 may protrude from the outer surface of the rack case 220 with inclination of a predetermined angle to form an eave structure. Here, the eave refers to a portion that protrudes outwards on the basis of the outer surface of the rack case 220, and plays a role in protecting and covering the battery module 210 in the underlying receiving portion 221 from the fire fighting water falling down from above. Additionally, when the battery rack 200 includes the drain guide unit 240 with the eave structure, the drain guide unit 240 may play a role in preventing venting gas to flames from the battery module 210 from spreading to the battery module 210 located on or below in the event of a fire in the battery module 210.

As shown in FIGS. 7 and 8, the drain guide unit 240 may be coupled to the outer surface of the rack case 220 at a location that is lower than the upper battery module 210 of every two battery modules 210 vertically adjacent to each other and higher than the lower battery module 210. That is, the plurality of drain guide units 240 may be arranged along the vertical direction, and may be coupled to the outer surface of the rack case 220 at each height between the upper battery module 210 and the lower battery module 210. For example, in this embodiment, the battery rack 200 includes seven battery modules 210 stacked in the vertical direction, and in this case, six drain guide units 240 may be coupled to the front outer surface 220F of the rack case 220, and another six drain guide units 240 may be coupled to the rear outer surface 220R of the rack case 220. Then, when the fire fighting water is fed in response to a thermal event in any of the seven battery modules 210, the other battery modules 210 except the corresponding battery module 210 may avoid flood damage caused by the fire fighting water.

Referring to FIG. 8, seeing the front surface portion of the rack case 220, the drain guide unit 240 is configured to partially cover the front side of a front open end of the underlying receiving portion 221. In this case, when the battery module 210 while placed in horizontal condition is directly inserted into the receiving portion 221, the battery module 210 cannot be inserted into the receiving portion 221 due to interference with the drain guide unit 240. Unlike this embodiment, the eaves of the drain guide unit 240 may be short in length to avoid interference with the drain guide unit 240 when inserting the battery module 210 into the receiving portion 221. However, in this embodiment, the eaves of the drain guide unit 240 is long in length to drain the fire fighting water by the drain guide unit 240 more effectively.

In this case, to overcome the difficult when inserting the battery module 210 into the receiving portion 221, the battery rack 200 according to this embodiment includes the drain guide unit 240 of rotatable type.

Additionally, as shown in FIG. 6, before inserting the battery module 210 into the receiving portion 221 of the rack case 220, the drain guide unit 240 may be rotated and attached to the outer surface of the rack case 220.

Additionally, the drain guide unit 240 may be configured to rotate in the upward direction to cover the receiving portion 221 located on the drain guide unit 240, and may be configured to rotate in the downward direction to form the eave structure for the underlying receiving portion 221 as shown in FIG. 7.

By the above-described configuration, when receiving the battery module 210 in the rack case 220, for example, in the condition shown in FIG. 6, the battery module 210 may be first inserted into the bottommost receiving portion 221 and the drain guide unit 240 located immediately on the bottommost receiving portion 221 may rotate to form the eave structure. Then, the second receiving portion 221 from the bottommost side is open to allow the battery module 210 to be inserted into the receiving portion 221. In this instance, the second battery module 210 is inserted into the second receiving portion 221. In this pattern, when the battery modules 210 are inserted in a sequential order from the bottommost receiving portion 221 to the topmost receiving portion 221, all the battery modules 210 are received in the rack case 220 and all the drain guide units 240 form the eave structure with respect to the outer surface of the rack case 220 as shown in FIG. 7.

Describing the rotatable drain guide unit 240 according to this embodiment in more detail, the drain guide unit 240 may include a drain guide plate 241 and a stopper 242.

The drain guide plate 241 may be in the shape of a plate that is hinged 243 to the outer surface of the rack case 220. The drain guide plate 241 may have a sufficient size to cover the receiving portion 221 located on the drain guide plate 241 when it is rotated upwards and attached to the outer surface of the rack case 220 and may be made of any stiff material, for example, plastics or metals. Additionally, the drain guide plate 241 may have a magnet 244 in the opposite edge area to the hinged 243 edge area as shown in the enlarged diagram of FIG. 6. The magnet 244 may be used to rotate the drain guide plate 241 upwards and fix it to the outer surface of the rack case 220.

As described above, the eave structure is formed for rotating the drain guide plate 241 attached to the outer surface of the rack case 220 in the downward direction (-Z direction) to protect and partially cover the underlying receiving portion 221.

In this instance, the stopper 242 may be applied to limit the rotation of the drain guide plate 241 so that the drain guide plate 241 is at a preset angle θ with respect to the outer surface of the rack case 220. Here, the preset angle θ may be, for example, determined in a range between 30° and 60°.

In the case of this embodiment, the stopper 242 may be in the shape of a protrusion that protrudes from the edge area of the drain guide plate 241 close to the rotation axis so as to contact the outer surface of the rack case 220 at the preset angle θ as shown in the enlarged section of FIG. 7.

The protrusion may be preferably in the shape of an approximately right-angled triangle in cross section and extended to a length corresponding to the horizontal (±X direction) width of the drain guide plate 241. By the stopper 242, the drain guide plate 241 rotates in the downward direction, and stops when the hypotenuse of the right-angled triangle comes into contact with the outer surface of the rack case 220. Accordingly, the drain guide plate 241 may form the eave structure that protrudes with inclination of the preset angle with respect to the outer surface of the rack case 220.

Meanwhile, the drain guide unit 240 according to this embodiment includes a first drain guide unit 240A on the front outer surface 220F of the rack case 220 as shown in FIG. 8, and a second drain guide unit 240B on the rear outer surface 220R of the rack case 220 as shown in FIGS. 9 and 10.

The first drain guide unit 240A may have a sufficient size to cover the front open end of each receiving portion 221, and the second drain guide unit 240B may have a sufficient size to cover the rear open end of each receiving portion 221. For example, as described above, the first drain guide unit 240A may have a sufficient size to cover the front open end of the receiving portion 221 when the first drain guide unit 240A is rotated in the upward direction (+Z direction) and attached to the front outer surface of the rack case 220 as shown in FIG. 6, and likewise, the second drain guide unit 240B may have a sufficient size to cover the rear open end of the receiving portion 221 when the second drain guide unit 240B is rotated in the upward direction (+Z direction) and attached to the rear outer surface of the rack case 220.

That is, as shown in FIGS. 8 and 10, when the size of the front open end of the receiving portion 221 and the size of the rear open end are different, the size of the first drain guide unit 240A and the size of the second drain guide unit 240B corresponding to them may be different.

In particular, in this embodiment, each receiving portion 221 of the rack case 220 has the narrower horizontal width (±X direction) of the rear open end than the horizontal width of the front open end. In other words, as shown in FIG. 10, the horizontal width of the rear open end of the receiving portion 221 has a width as much as 'L 1'. This is to place the rack connection pipe 230 and the second drain guide unit 240B in the rear outer surface 220R of the rack case 220 without interference. That is, the rack connection pipe 230 may be disposed in the remaining portion as much as 'L2' in FIG. 10 to avoid interference with the second drain guide unit 240B.

The rack connection pipe 230 is configured to supply the fire fighting water into each battery module 210 in case of emergency, and may have one side connected in communication with the fire fighting water supply pipe 400 and may be configured to pass through the rear outer surface of the rack case 220 and connect to the battery module 210 disposed in the receiving portion 221. For example, as shown in FIG. 9, the rack connection pipe 230 may include a main pipe 231 disposed in the vertical direction with respect to the rack case 220 and a plurality of connection nozzles 232 branching off from the main pipe 231 perpendicularly to the main pipe 231, and each connection nozzle 232 may be connected to a feed valve 217 disposed in the rear surface of the battery module 210 through the rear outer surface of the rack case 220. For reference, each connection nozzle 232 may be inserted into the rack case 220 through a through-hole (not shown) formed in the rear outer surface of the rack case 220.

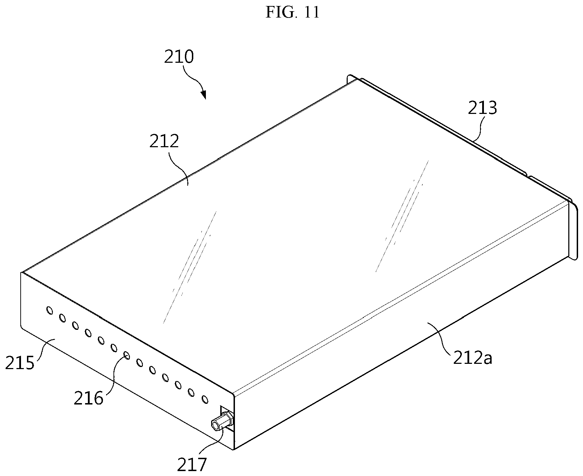

Subsequently, the configuration of the battery module 210 for feeding the fire fighting water into the battery module 210 in the event of thermal runaway or fire in the secondary batteries 211 will be described with reference to FIGS. 11 to 13.

As described above, the battery module 210 may include the module housing 212, the secondary batteries 211 received in the module housing 212, the air conditioning hole 216 and the feed valve 217 in the rear surface of the module housing 212 and the cooling fan 214 in the front surface of the module housing 212.

Accordingly, when the battery module 210 is inserted into the receiving portion 221 of the rack case 220, the cooling fan 214 may be disposed on the front side of the rack case 220 and the air conditioning hole 216 and the feed valve 217 may be disposed on the rear side of the rack case 220. When the battery module 210 is inserted and disposed in the receiving portion 221 of the rack case 220, the lower part of the air conditioning hole 216 may be closed by the rear outer surface of the rack case 220. That is, as indicated by 'K1' in FIG. 10, the rack case 220 may have a wall that protrudes from the bottom surface of each receiving portion 221 at the rear open end of each receiving portion 221. The wall plays a role in preventing the fire fighting water from leaking through the rear side of the receiving portion 221. The wall is configured to guide the drain toward the front side of the rack case 220, but the wall may be omitted when guiding the drain toward the front side and the rear side of the rack case.

The module housing 212 may be in the shape of an approximately cuboidal box having an internal space for receiving a cell stack formed by stacking the secondary batteries 211 in one direction, and including a bottom plate, a top plate, left and right side plates 212a, a front plate 213 and a rear plate 215. Here, the six plates may be assemblable and disassemblable, but may be partially assemblable and disassemblable by integrally fabricating some of the six plates and individually fabricating the remaining plates.

For the secondary battery 211, a pouch type secondary battery 211 may be used. The plurality of pouch type secondary batteries 211 is stacked in one direction to form the cell stack, and the cell stack is received in the module housing 212.

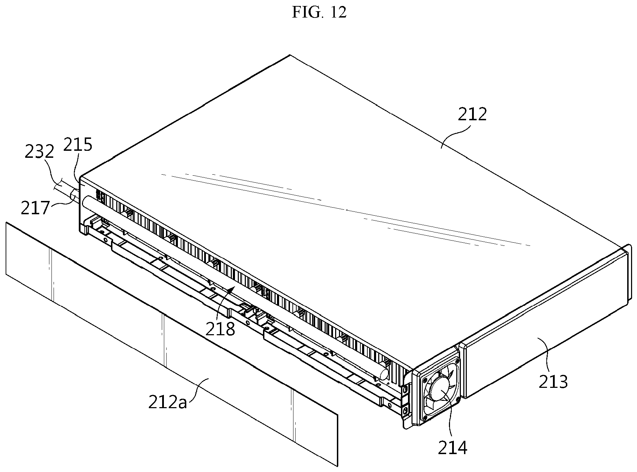

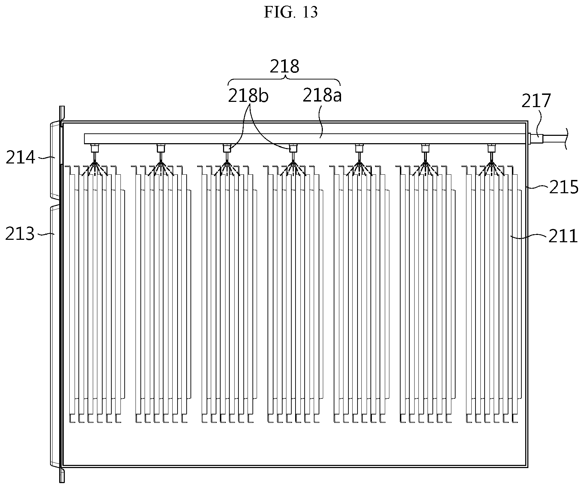

The cell stack may be disposed in the module housing 212 such that the lengthwise direction of the pouch type secondary batteries 211 is perpendicular to the side plates 212a of the module housing 212. In other words, as shown in FIGS. 12 and 13, when each direction perpendicular to the stack direction of the secondary batteries 211 is defined as a front surface direction and a rear surface direction of the cell stack, the cell stack may have the front surface portion and the rear surface portion facing the left and right side plates 212a at a predetermined gap between them respectively. As described above, when the cell stack is disposed in the module housing 212, the module housing 212 may have an air flow space and a space for placing a fire extinguishing unit 218.

The fire extinguishing unit 218 may include a pipe shaped unit body 218a and a plurality of spray nozzles 218b as shown in FIG. 13.

The unit body 218a may be in the shape of a pipe having one end connected to the feed valve 217 and extended along the lengthwise direction of the module housing 212. Additionally, the plurality of spray nozzles 218b may be arranged at a predetermined interval along the lengthwise direction of the unit body 218a and may have outlets facing the cell stack.

Although not shown in detail, each spray nozzle 218b may include a glass bulb (not shown) configured to close the outlet through which jets of fire fighting water will be emitted in normal situation and open the outlet when thermal damage occurs. The glass bulb may be configured to receive a predetermined liquid or gas therein and break by volume expansion of the liquid or gas when it is heated. By the above-described configuration, for example, in a situation in which the temperature in the battery module 210 rises to 70°C to 200°C above or flames or high temperature venting gas causes thermal damage to the glass bulb, the material in the glass bulb may expand, the glass bulb may rupture and the outlet of the spray nozzle 218b may be open. Then, the jet of fire fighting water in the unit body 218a may be emitted toward the cell stack through the outlet of the spray nozzle 218b.

Unlike this embodiment, outside of the rear plate 215, one end of the feed valve 217 may be connected to the connection nozzle 232 of the rack connection pipe 230, and inside of the rear plate 215, the other end of the feed valve 217, that is, the outlet to which the glass bulb is coupled may be disposed. In this case, the fire extinguishing unit 218 may be omitted from the inside of the module housing 212.

By the above-described method of feeding the fire fighting water, the fire fighting water may be only fed into the battery module 210 in which the thermal event occurred among each battery module 210 included in the battery rack 200.

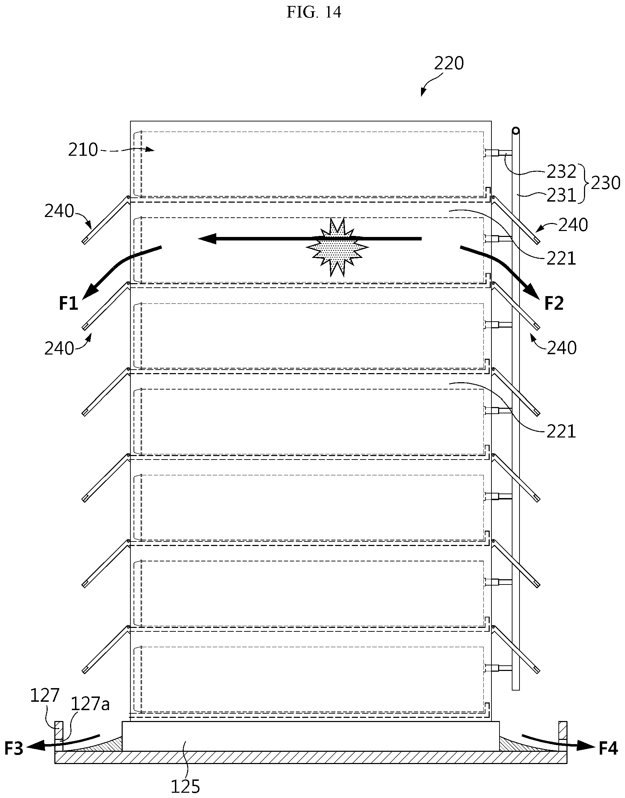

With the battery rack 200 according to an embodiment of the present disclosure, the drainage mechanism of the fire fighting water after feeding the fire fighting water when a thermal event occurs in the battery module 210 will be described with reference to FIG. 14 below.

For example, as shown in FIG. 14, when a thermal event occurs in the second battery module 210 from the top among the battery modules 210 included in the battery rack 200, the outlet of the spray nozzle 218b in the second battery module 210 is open. Then, by a pressure difference, the fire fighting water enters the battery module 210 through the feed valve 217 of the second battery module 210 from the rack connection pipe 230, moves along the unit body 218a and exits through the outlet of each spray nozzle 218b.

As described above, when the fire fighting water is directly fed into the second battery module 210 in which the thermal event occurs among the plurality of battery modules 210, it may be possible to suppress the fire situation or thermal runaway situation in the second battery module 210 more rapidly and effectively at the early stage. As a result, it may be possible to prevent thermal runaway or flame propagation to the other battery modules 210, and moreover, to prevent damage to the entire energy storage system 10 including the battery rack 200.

Meanwhile, the module housing 212 of the battery module 210 does not have a completely airtight structure. That is, the module housing 212 may have a gap due to the air conditioning hole 216 or the cooling fan 214 and an assembly clearance. Accordingly, the fire fighting water fed into the battery module 210 may leak out of the battery module 210 due to the above-described factors. When the fire fighting water leaking out of the battery module 210 flows into the other normal battery modules 210, it may cause serious flood damage to the corresponding battery modules 210.

As described above, the battery rack 200 according to the present disclosure may be configured to receive each battery module 210 in the receiving portions 221 having a structure in which the upper and lower sides and the left and right sides are closed except the front and rear sides, in order to prevent flood damage to the other normal battery module 210. For example, when leakage of the fire fighting water occur in the second battery module 210, the fire fighting water is only drained in the frontward direction and the rearward direction of the rack case 220 as shown in FIG. 14. Accordingly, the risk of flood damage of the other normal battery modules 210 is very low.

Moreover, when the fire fighting water is drained out of the receiving portion 221 in which the second battery module 210 is present, the flow of the fire fighting water may be guided further outwards along the drain guide unit 240 to cause the fire fighting water to be dropped down to the location spaced the predetermined distance apart from the front outer surface or the rear outer surface of the rack case 220. Additionally, the drain guide units 240 are vertically disposed in multistep arrangement along the heightwise direction of the rack case 220, and the drain guide units 240 disposed at lower positions protect each battery module 210 from the fire fighting water falling down from the height of the second battery module 210, thereby further reducing the flood damage risk of the other normal battery modules 210 below the second battery module 210.

Meanwhile, each battery rack 200 may be fixedly installed to the upper surface of a rack die 125 which protrudes upwards from the bottom plate 120 and supports the battery rack 200 a predetermined height apart from the bottom plate 120. Additionally, the bottom plate 120 of the container 100 may have a fence 127 surrounding the rack die 125 with a predetermined gap from the rack die 125 and having at least one drain hole 127a.

As shown in FIG. 14, when the fire fighting water falls down from the battery module, the fire fighting water may gather to the space between the rack die 125 and the fence 127, move along a slope formed between the rack die 125 and the fence 127 as indicated by F3 or F4 and go out of the fence 127 through the drain hole 127a. Here, when the fire fighting water goes as indicated by F3 and F4, the flow may be guided to the central drain region 123A or the side drain regions 123B,123C of the bottom plate 120 (see FIGS. 1 and 4).

As described above, the battery rack 200 according to the present disclosure may prevent the fire fighting water fed into the battery module 210 in which the thermal event occurred from entering the other adjacent battery modules 210.

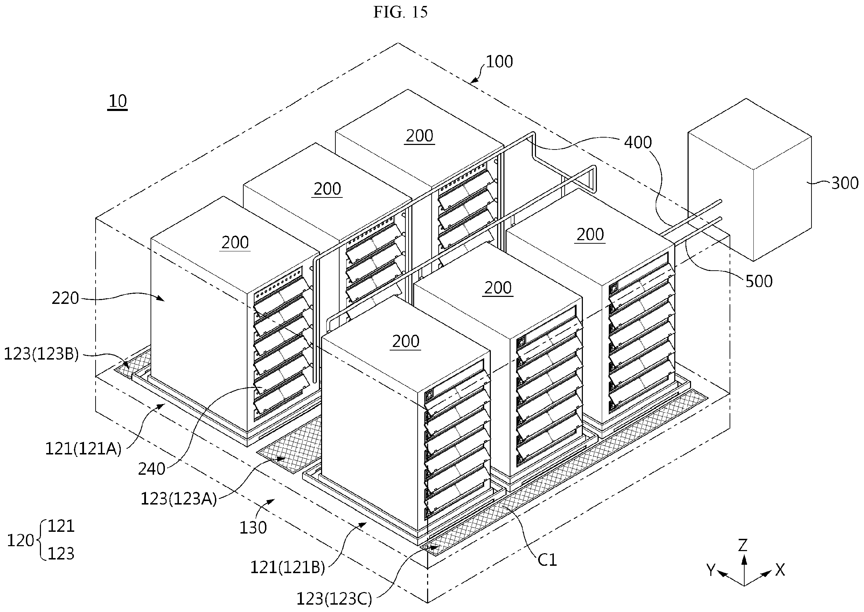

Subsequently, the energy storage system according to another embodiment of the present disclosure will be described with reference to FIGS. 15 to 17. The same reference number as the above-described embodiment indicates the same element, and in the description of the same element, redundant description is omitted and difference(s) between this embodiment and the above-described embodiment will be described.

The energy storage system 10 according to another embodiment of the present disclosure may include the container 100, at least one battery rack 200 received in the internal space of the container 100, and the water tank 300 connected to the battery rack 200 through the fire fighting water supply pipe 400 and configured to store the fire fighting water to be fed into the battery rack 200 in case of emergency. Here, the container 100 includes the bottom plate 120 in which the battery rack 200 is disposed and the fire fighting water collection chamber 130 disposed lower than the bottom plate 120 and having at least one side in communication with the bottom plate 120 to allow the fire fighting water dropped from the battery rack 200 to enter. Additionally, unlike the above-described embodiment, the energy storage system according to another embodiment of the present disclosure further includes a fire fighting water collection pipe 500 connecting the fire fighting water collection chamber 130 to the water tank 300.

According to the energy storage system 10 according to another embodiment of the present disclosure, the fire fighting water used to suppress fire may be automatically collected and refilled in the water tank 300. Accordingly, after the fire situation ends, there is no need to clean or remove the used fire fighting water in the container 100 to re-operate the energy storage system 10, and since the fire fighting water coming out of the water tank 300 is refilled in the water tank 300 after collection, there is an effect as if the storage capacity of the water tank 300 is enhanced.

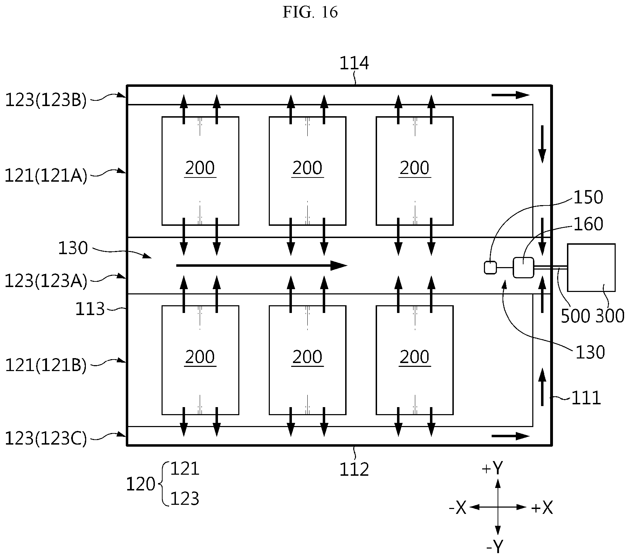

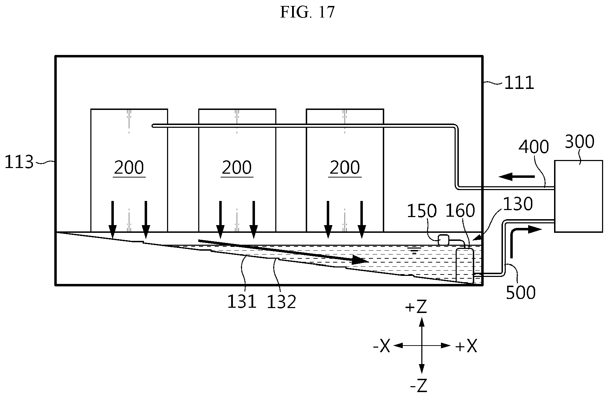

Referring to FIGS. 16 and 17, to drain the fire fighting water collected in the fire fighting water collection chamber 130 out of the container 100, the energy storage system 10 according to another embodiment of the present disclosure may include the water level sensor 150 and the drain pump 160.

The water level sensor 150 and the drain pump 160 may be disposed in the fire fighting water collection chamber 130, and the drain pump 160 may be configured to operate when the water level in the fire fighting water collection chamber 130 reaching the predetermined height is detected by the water level sensor 150. Here, the water level sensor 150 may be a level gauge or a float switch that outputs a signal when the height of the liquid surface reaches the predetermined level, and the drain pump 160 may be a submersible pump that works in water.

For example, when the water level in the fire fighting water collection chamber 130 reaches the predetermined level, the water level sensor 150 may output the signal, and in this instance, in response to the signal, the drain pump 160 may be switched on and start working to push the fire fighting water into the fire fighting water collection pipe 500.

The fire fighting water collection pipe 500 is extended from the fire fighting water collection chamber 130 to the water tank 300 through one wall of the container 100, that is, the first wall 111. Accordingly, the fire fighting water may be fed into the water tank 300 through the fire fighting water collection pipe 500 by the operation of the drain pump 160. Meanwhile, the valve unit (not shown) that shuts off the flow channel or controls the flow volume such as a ball valve or a gate valve may be installed in the fire fighting water collection pipe 500 to shut off the flow of the fire fighting water or control the flow volume.

Since the fire fighting water used to suppress fire is drained out of the container 100, it may be possible to reduce the time taken to re-operate the energy storage system 10 after the fire situation ends. Additionally, since the fire fighting water is collected and stored in the water tank 300 (having the reduced capacity since the fire fighting water came out of the water tank 300 to suppress fire) again, it may be possible to obtain the effect as if the storage capacity of the water tank 300 is enhanced.

Although not shown in the drawing for convenience of description, the energy storage system 10 may further include an air conditioning device to manage the temperature in the container 100, a Master Battery Management System to control all the battery racks 200 or the like.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

The terms indicating directions such as upper, lower, left, right, front and rear are used for convenience of description, but it is obvious to those skilled in the art that the terms may change depending on the position of the stated element or an observer.

## Claims

1. An energy storage system, comprising:
at least one battery rack including a plurality of stacked battery modules; and
a container accommodating the battery rack,
wherein the container includes:
a bottom plate in which the battery rack is disposed; and a fire fighting water collection chamber disposed lower than the bottom plate and having at least one side in communication with the bottom plate to allow a fire fighting water dropped from the battery rack to enter.

2. The energy storage system according to claim 1, wherein the bottom plate includes a rack installation region in which the battery rack is installed, and a drain region which is an open region to allow the fire fighting water to fall down, and the fire fighting water collection chamber is disposed vertically below the drain region, and
wherein the fire fighting water collection chamber has an inclined bottom surface to direct the fire fighting water entering through the drain region toward a wall of the container.

3. The energy storage system according to claim 2, comprising:
a valve unit coupled to the wall of the container to drain the fire fighting water collected in the fire fighting water collection chamber out of the container.

4. The energy storage system according to claim 3, comprising:
a water level sensor disposed in the fire fighting water collection chamber,
wherein the valve unit is configured to be open/closed based on a signal from the water level sensor.

5. The energy storage system according to claim 4, comprising:
a drain pump disposed in the fire fighting water collection chamber, and configured to operate based on the signal from the water level sensor.

6. The energy storage system according to claim 2, wherein a plurality of the battery racks is provided and arranged in N rows in the bottom plate.

7. The energy storage system according to claim 6, wherein the drain region is disposed in an area between the rows of the battery racks in the bottom plate or an area between a sidewall of the container and an outermost row of the battery racks.

8. The energy storage system according to claim 2, wherein the drain region is covered with a plate of a porous structure.

9. The energy storage system according to claim 1, further comprising:
a water tank disposed outside of the container;
a fire fighting water supply pipe connecting the water tank to the battery rack; and
a fire fighting water collection pipe connecting the fire fighting water collection chamber to the water tank.

10. The energy storage system according to claim 9, wherein a water level sensor and a drain pump are disposed in the fire fighting water collection chamber, and
wherein the drain pump is configured to operate so as to move the fire fighting water to the water tank through the fire fighting water collection pipe in response to detection of a water level in the fire fighting water collection chamber reaching a predetermined height by the water level sensor.

11. The energy storage system according to claim 1, wherein the battery rack includes:
a plurality of battery modules;
a rack case having receiving portions, each configured to insert and receive each of the plurality of battery modules at each predetermined height, and having a structure in which upper and lower sides and left and right sides are closed except front and rear sides;
a rack connection pipe connected to each of the battery modules received in the receiving portions to supply the fire fighting water when a fire occurs; and
a drain guide unit disposed on at least one surface of a front outer surface or a rear outer surface of the rack case, and configured to guide drainage of the fire fighting water to cause the fire fighting water coming out of the battery module after having been fed into the battery module to be dropped down to a location spaced a predetermined distance apart from the outer surface of the rack case.

12. The energy storage system according to claim 11, wherein the drain guide unit is coupled to the outer surface of the rack case at a location which is lower than an upper battery module of every two battery modules vertically adjacent to each other and higher than a lower battery module.

13. The energy storage system according to claim 11, wherein the drain guide unit protrudes from the outer surface of the rack case with inclination of a predetermined angle to form an eave structure.

14. The energy storage system according to claim 11, wherein the drain guide unit is rotatably coupled to the outer surface of the rack case.

15. The energy storage system according to claim 14, wherein the drain guide unit is configured to form an eave structure for the underlying receiving portion when it is rotated downwards.

16. The energy storage system according to claim 14, wherein the drain guide unit includes:
a drain guide plate of a plate shape hinged to the outer surface of the rack case; and
a stopper configured to limit rotation of the drain guide plate so that the drain guide plate is at a preset angle with respect to the outer surface of the rack case.

17. The energy storage system according to claim 1, further comprising:
a rack die which protrudes upwards from the bottom plate and supports the battery rack a predetermined height apart from the bottom plate; and
a fence disposed around the rack die with a predetermined gap from the rack die, protruding upwards from the bottom plate and having at least one drain hole on a side.
